# EUROPEAN PATENT SPECIFICATION

(11) **EP 3 494 781 B1**
(45) Date of publication and mention of the grant of the patent: **07.10.2020**
(21) Application number: 17205909.9
(22) Date of filing: 07.12.2017
(51) Int. Cl.: A01K 13/00

(54) **A DEVICE FOR REMOVING DEAD HAIR FROM A SKIN OF A DOG**
VORRICHTUNG ZUM ENTFERNEN TOTER HAARE AUS DER HAUT EINES HUNDES
DISPOSITIF POUR ENLEVER LES POILS MORTS DE LA PEAU D'UN CHIEN

(43) Date of publication of application: 12.06.2019
(73) Proprietor: Karhia Innovations Oy, 01720 Vantaa (FI)
(72) Inventor: Ristaniemi, Markus, 01730 Vantaa (FI); Ristaniemi, Sami, 01760 Vantaa (FI)
(74) Representative: Aaltonen, Janne Lari Antero

(56) References cited:
- EP-A1- 0 476 185
- EP-A1- 2 880 972
- GB-A- 2 262 698
- US-B1- 6 810 553

## Description

### TECHNICAL FIELD

The present disclosure relates generally to a pet grooming device; and more specifically to a device for removing dead hair from a skin of a dog.

### BACKGROUND

In the changing social setup, number of people owning pet animals has increased drastically. For example, such pet animals may include dogs, cats and the like. Mostly, owners pay special attention towards wellbeing of their pet animals by providing proper food, vaccinations and maintaining cleanliness. One way to maintain cleanliness or grooming pet animals includes removing dead or fallen (unwanted) hair from the skin of the animals.

Some dogs have a longer, harsh top coat with a dense, woolly undercoat beneath. Two or three times a year the long, dead top coat will need to be plucked out to allow the new top coat to grow in. The hairs of dead top coat may still be attached to the dog's skin, but they are no longer living hair. Removing such dead hair does thus not cause any pain to the dog, but its removal may be hard for the person doing the removal, as the dead hair can be rather difficult to grasp. It is also very important to use a correct force for pulling, so that the dead hair is removed but no the living hair, which would cause pain to the dog.

Generally, such unwanted hair may be removed manually with the help of combs or brushes, but not all dead hear can be removed with a comb or a brush. Alternatively, such unwanted hair may be removed using electrically driven devices. Typically, such devices may include a base and a gripping part operable to contact the base, and thereby creating a pinching action therebetween. In use, the hair is guided towards in-between the base and the gripping part, which enable in pulling the unwanted hair (due to pinching action) for the removal of the unwanted hair. However, such devices suffer from the problem of adjustability, i.e. designed to apply uniform pull on the guided hair. Therefore, hair of different pet animals having different hair-densities or different-lengths is subject to the uniform pull, which does not enable in efficiently removing the dead hair from the skin of the animals.

Document EP 2880972 A1 discloses a device for plucking dead hairs from the skin of a dog, comprising a handle part for handling the device, a stem part connected to the handle part, on the end of which stem part is a comb part for guiding the hairs of the dog into the device, a base on the stem part, onto which base hairs are guided by means of the comb part, a gripping part that is on the stem part and is moveable along a predetermined trajectory, which gripping part in a part of its trajectory moves in the direction of the base and presses against the base, in which case the hairs of the dog are between the base and the gripping part, and in which case by means of the movement of the gripping part a pulling motion is exerted on the hairs that are between the gripping part and the base.

Therefore, in light of the foregoing discussion, there exists a need to overcome the aforementioned drawbacks associated with existing devices for removing dead hair from a skin of a pet animal.

### SUMMARY

The present disclosure seeks to provide a device for removing dead hair from a skin of a pet animal, such as a dog. The present disclosure seeks to provide a solution to the adjustability problem associated with existing devices for removing dead hair from the skin of the pet animal. An aim of the present disclosure is to provide a solution that overcomes at least partially the problems encountered in prior art, and provides efficient and simple device for removing dead hair from the skin of the dog. The invention is defined in claim 1.

In one aspect, an embodiment of the present disclosure provides a device for removing dead hair from a skin of a dog, the device comprising
- means for removing dead hair from the skin of the dog, and
- means for attaching the device to a suctioning means,
wherein the means for removing dead hair comprises
- a base comprising an endless mat arranged to move along a first pre-determined trajectory,
- a gripping part arranged to move along a second pre-determined trajectory, and
- a removable means for guiding hair of the dog between the base and the gripping part,
wherein the first pre-determined trajectory has a first portion that is parallel to a second portion of the second pre-determined trajectory, the first portion having a length that is at most 50 % of the length of the first pre-determined trajectory and the second portion having a length that is at most 50 % of the length of the second pre-determined trajectory, characterized in that the means for removing dead hair further comprises means for adjusting a distance between the base and the gripping part along the first portion and the second portion.

Embodiments of the present disclosure substantially eliminate or at least partially address the aforementioned problems in the prior art, and enables in efficiently removing dead hair from the skin of the dog.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
- FIG. 1: is a perspective view of a device for removing dead hair from a skin of a dog, in accordance with an embodiment of the present disclosure; and
- FIGs. 2-4: depict different internal structural and functional means of the device of FIG. 1 for the operation thereof, in accordance with various embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a device for removing dead hair from a skin of a dog, comprising
- means for removing dead hair from the skin of the dog, and
- means for attaching the device to a suctioning means,
wherein the means for removing dead hair comprises
- a base comprising an endless mat arranged to move along a first pre-determined trajectory,
- a gripping part arranged to move along a second pre-determined trajectory, and
- a removable means for guiding hairs of the dog between the base and the gripping part,
wherein the first pre-determined trajectory has a first portion that is parallel to a second portion of the second pre-determined trajectory, the first portion having a length that is at most 50 % of the length of the first pre-determined trajectory and the second portion having a length that is at most 50 % of the length of the second pre-determined trajectory, wherein the means for removing dead hair further comprises means for adjusting a distance between the base and the gripping part along the first portion and the second portion.

The present disclosure seeks to provide a reliable and user-friendly solution, i.e. the device for removing the dead hair form a skin of the dog. The distance between the gripping part and the base of the device is adjustable based on the hair attributes or characteristics (for example, such as hair density, hair length and the like). Beneficially, such adjustment of the distance between the gripping part and the base allows for removing the dead hair efficiently. Furthermore, the hair of different dogs having different hair-densities or different-lengths is subject to different pull force. Therefore, such different pull forces enable the device to pluck only the dead hair form the skin of the dog.

According to an embodiment, the means for removing dead hair is arranged to exert a pulling force of 5-50 N on the dead hair. This force is created by a friction between the base and the gripping part, between which the dead hair is "trapped" for pulling. The pulling force can be for example from 5, 10, 15, 20, 25, 30, 35, 40 or 45 N up to 10, 15, 20, 25, 30, 35, 40, 45 or 50 N. The pulling force can be adjusted by adjusting the distance between the base and the gripping part, and it may be slightly different for different types of dogs. For some dogs, it may be for example from 15 to 25 N, for example about 20 N.

The device for removing dead hair from the skin of the dog comprises the means for removing dead hair from the skin of the dog. The means for removing dead hair comprises the base. The base comprises the endless mat arranged to move along the first pre-determined trajectory.

Optionally, the endless mat refers to a conveyor belt like structure installed around two rotating rollers. The endless mat may be arranged to move freely and continuously around the two rotating rollers. In an embodiment, one of the two rotating rollers may be connected to a rotary motion source, such as a motor, with the help of a motion transfer mechanism to acquire rotational motion. In an example, the motion transfer mechanism may include components, like links, shafts, gears, pulleys, bearings and the like. The motion transfer mechanism enables transferring the rotary motion of motor to one of the two rotating rollers, and thereby allowing the endless mat to move along the first pre-determined trajectory

Optionally, the endless mat includes a flat surface; alternatively, the endless mat may include an irregular surface. Furthermore, the endless mat is made of an elastomeric material. More optionally, the elastomeric material is rubber. Examples of elastomeric material may include, but are not limited to, polyisoprene or natural rubber, polybutadiene, polyisobutylene, silicones and polyurethanes. The elastomeric material such as rubber requires little installation space, and has high strain failure point.

The means for removing dead hair further comprises the gripping part arranged to move along the second pre-determined trajectory. The term *"second pre-determined trajectory"* used herein relates to a path to be followed by the gripping part. According to an embodiment, the gripping part is moveable in a direction opposite to the direction of the movement of the base. In an example, if the base is moving along the anti-clockwise direction, the gripping part is moveable along the clockwise direction. In such instance, when the gripping part is configured to or operable to contact the base, both the gripping part and the base make or create a pinching action (or a pulling motion).

Optionally, the gripping part comprises at least one removable elastomeric surface pad. The elastomer may be the same as for the endless mat or it may be a different elastomer. More optionally, the elastomeric surface pad is made of rubber. The elastomeric surface pad may include a plurality of bristles made of rubber. Beneficially, the elastomeric surface pad may provide higher gripping property.

As mentioned above, the first pre-determined trajectory has the first portion that is parallel to the second portion of the second pre-determined trajectory. The first portion has the length that is at most 50% of the length of the first pre-determined trajectory and the second portion having the length that is at most 50% of the length of the second pre-determined trajectory.

Optionally, the first portion and the second portion have a length of 10-40 mm. Therefore, an overall length of the first pre-determined trajectory and the second pre-determined trajectory may be in a range of 20-80 mm. Furthermore, the movement of the first pre-determined trajectory and the second pre-determined trajectory are in opposite direction. It will be appreciated that such movement of the first and second pre-determined trajectories in opposite direction allows the first and second portions to move in a same direction.

Optionally, the second pre-determined trajectory includes a substantially D-shape. Furthermore, optionally, the first pre-determined trajectory is substantially oval-shaped.

The gripping part is arranged to move by movement means. It will be appreciated that the term *"movement means"* used herein, refers to a set of elements configured to provide the movement to the gripping part to follow the second pre-determined trajectory. Optionally, the movement means comprises plurality of mechanical components, for example, such as, but are not limited to mechanical linkages, gears, cams, actuators, shafts, axles, bolts and nuts. Such mechanical components are arranged in manner such that a desired movement (D-shaped trajectory) is provided to the gripping part.

Optionally, the movement means comprises a stem having a first end and a second end, the gripping part being arranged in connection with the first end. The stem is made up of materials such as, but not limited to, mild steel, nickel, nickel-chromium or chromium-vanadium steel.

Optionally, the first end of the stem is coupled with the gripping part. For example, the first end of the stem is connected with the gripping part using one of a bolt, a screw, a pin, cotter joint and the like.

Optionally, the second end of the stem is arranged in connection with a rotary-motion connector to allow the second end to rotate. Optionally, the rotary-motion connector comprises a disc, a rectangular bar or a semi circular disc having a rectangular bar extending therefrom. In an embodiment, the second end of the stem is pivotally connected with the rotary-motion connector. Furthermore, the second end of the stem is connected with the rotary-motion connector using one of a bolt, a screw, a pin, a cotter joint and the like.

Optionally, the device comprises a motor arranged in connection with the rotary-motion connector to provide the rotational movement to the second end of the stem. In an example, the motor may be a DC (direct current) motor. Optionally, the device comprises a battery unit to provide electric power to the motor. Alternatively, the motor may operate with a wired connection from a current source.

Optionally, the motor is connected with the movement means. For example, a rotating shaft of the motor is coupled with the rotary-motion connector to transfer the rotational movement of the motor. The rotary-motion connector is further arranged in connection with the second end of the stem. In operation, such arrangement of the rotating shaft, the rotary-motion connector and the second end of the stem allows for transmitting the rotational movement from the motor to the stem. Thus, the stem is rotated along the second end thereof, and thereby providing a rotational movement to the gripping part.

Optionally, the movement means comprises a motion guiding element. The motion guiding element is arranged in connection with the stem at a point between the first end and the second end of the stem. The motion guiding element allows the point between the first end and the second end to move along an arc, thus translating a rotational movement of the second end of the stem into a movement of the gripping part along the second pre-determined trajectory. For example, an intermediate point or portion of the stem may be coupled to the motion guiding element using one of a bolt, a screw and a pin.

According to an embodiment, the motion guiding element comprises a pivoting arm. Furthermore, the pivoting arm includes a first end and an opposite second end. Moreover, the first end is pivotally coupled to the intermediate point or portion of the stem. Additionally, the second end is pivotally coupled to a body or a housing of the device.

Optionally, the hinged connection of the second end allows the first end (coupled to the intermediate point of the stem) of the pivoting arm to move along the arc. Specifically, the pivoting arm has a pre-determined angle of rotation due to pivotal connection thereof. In an example, the first end of the pivoting arm moves 60 degrees with respect to the second end and thereby allowing the moving first end to form an arc. In another example, the first end may be configured to move, less or greater than 60 degrees, with respect to the second end to form the arc.

Optionally, the first end moves in a to-and-fro manner along the arc. Therefore, the connection of the pivoting arm with the stem allows for translating the rotational movement of the second end of the stem into both rotational and linear motion of the first end of the stem (coupled to the gripping part). Notably, the rotary-motion connector allows the second end of the stem to rotate with the rotary-motion connector, whilst the motion guiding element restricts the movement of the intermediate point of the stem along the arc. Therefore, a resultant movement of the gripping part (coupled to the first end of the stem) includes both linear and rotational movement and constitutes the second pre-determined trajectory.

According to an embodiment, during operation, when the second end of the stem is at a most backward and upward position, the rotary movement of the second end of the stem (coupled to the rotary-motion connector) tends to move the second end of the stem downward. However, a downward movement of the intermediate point of the stem is restricted by the motion guiding element (for example, the pivoting arm), which causes the intermediate point of the stem to pivot and move the first end of the stem (connected with the gripping part) upward, thereby allowing the gripping part to move upward. The further rotation of the second end of the stem further allows the intermediate point of the stem to pivot and slowly move forward along the arc. Therefore, when the intermediate point of the stem reaches midpoint or midway in the arc, the first end of the stem is at a heighted point in the second pre-determined trajectory. Thereafter, further rotary movement of the second end of the stem causes the intermediate point of the stem to pivot and move slowly forward along the arc, and the first end of the stem (connected with the gripping part) to move downward. Therefore, when the intermediate point reaches extreme end of the arc in the forward direction (i.e. when the second end of the stem is at a most forward and downward position) the gripping part tends to touch the base. The further rotary movement of the second end of the stem tends to move the entire stem backward allowing the intermediate point of the stem to move linearly backward along the entire arc. The linear movement of the intermediate point of the stem along the entire arc allows for parallel movement of the gripping part with respect to the base. Therefore, the gripping part is configured to follow a D-shaped trajectory (i.e. the second pre-determined trajectory) with respect to the base.

Optionally, the motion guiding element comprises an arcuate element having an arc-shaped groove. In such a case, the arcuate element is arranged on the body or the housing of the device. More optionally, the arcuate element is fixedly arranged (without movement) within the device. For example, the arcuate member may be welded to the body or the housing. Alternatively, the arcuate element may be connected with the body or the housing using nuts and bolts, screws and the like. Optionally, the intermediate point of the stem is movably coupled to the arcuate element. Specifically, the intermediate point of the stem is configured to move along the arc-shaped groove of the arcuate element. Therefore, the connection of the arcuate element with the stem allows for translating the rotational movement of the second end of the stem into both rotational and linear motion of the first end of the stem. Notably, the rotary-motion connector allows the second end of the stem to rotate with the rotary-motion connector, whilst the arcuate element restricts the movement of the intermediate point of the stem along the arc-shaped groove (i.e. an arc). Therefore, a resultant movement of the gripping part (coupled to the first end of the stem) includes both linear and rotational movement and constitutes the second pre-determined trajectory. It will be appreciated that the arrangement of the arcuate element and the stem works in a similar manner as explained above in reference to the pivoting arm and the stem; and thereby allows movement of the gripping part along the second pre-determined trajectory.

As mentioned previously, the means for removing dead hair further comprises the means for adjusting the distance between the base and the gripping part along the first portion and the second portion. Specifically, the distance between the base and the gripping part is adjusted based on hair attribute or characteristic (for example, hair length, hair density and hair texture and so forth). For example, if the density of the hair is high, the distance between the base and the gripping part needs to be greater or larger compared to hair having low density. It will be appreciated that at least one of the gripping part and the base may be adjusted or moved in order to increase (or decrease) the distance therebetween.

According to an embodiment, the means for adjusting the distance is a means for shifting the base towards or further away from the gripping part. For example, the means for shifting the base may include a lever mechanism coupled to the base. The lever mechanism may be configured to move the base towards or further away from the gripping part. In an exemplary implementation, the lever mechanism may be operable to acquire multiple positions with respect to the base; thereby allowing the base to acquire multiple positions (or distances) with respect to the gripping part. In an embodiment, the lever mechanism may be operable with the help of a switch arranged outside the body or housing of the device. Therefore, a user may press the switch to move or actuate the lever mechanism and thereby adjusting a distance between the base and gripping part. Alternatively, the lever mechanism may be accessed by removing the removable means and thereby manually actuate and adjust the lever mechanism.

In another embodiment, the means for adjusting the distance may be a screw or another threaded part. The screw or similar may for example have the size of the bottom of the device, and the threaded structure allows adjusting the distance between the base and the gripping part. Most typically, such threaded structure can be easily controlled from the outside of the device, either without any tools or with a simple screwdriver or similar.

According to another embodiment, the means for adjusting the distance is a means for shifting the gripping part towards or further away from the base. Optionally, the means for shifting the gripping part may comprise a sliding tab. The sliding tab is arranged in contact with the motion guiding element (i.e. such as the pivoting arm). Specifically, the sliding tab is arranged in contact with the second end of the pivoting arm. Furthermore, the sliding tab is operable to move slidably to change a position of the second end of the pivoting arm. Such change in the position of the second end of the pivoting arm allows for moving the stem with respect to the base. Specifically, the change in the position of the second end of the pivoting arm allows the gripping part to move towards or further away from the base. It will be appreciated that the sliding tab may be configured to acquire multiple positions to allow the second end of the pivoting arm to acquire multiple positions and thereby adjusting the distance between the gripping part and the base at multiple levels. In an example, the sliding tab may be moved (slide) downward, which may allow the second end of the pivoting arm to move downward and thereby allowing the gripping part to move further towards the base. Similarly, the sliding tab may be moved (slide) upward, which may allow the second end of the pivoting arm to move upward and thereby allowing the gripping part to move further away from the base.

In an embodiment, the sliding tab may be configured to have one of a circular shape or an elliptical shape. Furthermore, the sliding tab may be operable and adjustable with the help of a switch arranged outside the body or housing of the device. Therefore, a user may press the switch to move or actuate the sliding tab and thereby moving the second end of the pivoting arm to adjust the distance between the base and gripping part.

As mentioned previously, the means for removing dead hair further comprises the removable means for guiding hair of the dog between the base and the gripping part. Optionally, the removable means comprises a comb having plurality of blades. More optionally, the plurality of blades is arranged in a side by side manner and in consecutive rows that are placed at a small distance from each other. Alternatively, the plurality of blades may be arranged in an indefinite sequence, in which a size and shape of the plurality of blades may vary. Furthermore, the plurality of blades may be configured to have different lengths and spaces therebetween to accommodate hair of different lengths and densities. For example, the plurality of blades may be long to accommodate long hair and vice versa, and the spaces therebetween may increase with the increase in the hair densities.

As mentioned previously, device comprises means for attaching the device to the suctioning means. Optionally, the means for attaching the device to the suctioning means includes a suction nozzle arranged on the body or the housing of the device and positioned adjacent to the endless mat (i.e. the base) for removing the dead hair deposited thereon. For example, a pipe (or hose) may be coupled to the suction nozzle at one end of the pipe, and other end of the pipe may be coupled to the suctioning means. Therefore, the suctioning means (for example, a motorised fan) generates a suction force to draw the dead hair through the pipe and get collected into a container, which may be a part of the suctioning means.

In an embodiment, the suctioning means may be an integral part of the device. For example, a small container may be arranged or attached to the device at means for attaching the device to the suctioning means. Furthermore, a motorised fan may be arranged within the small container to generate a suction force for drawing the dead hair into the small container. Also, the small container may be detachable in nature to allow easy cleaning of the dead hair from within the small container.

### DETAILED DESCRIPTION OF THE DRAWINGS

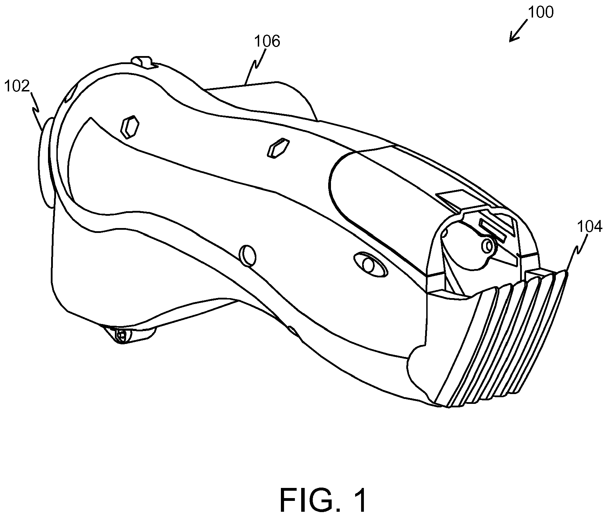

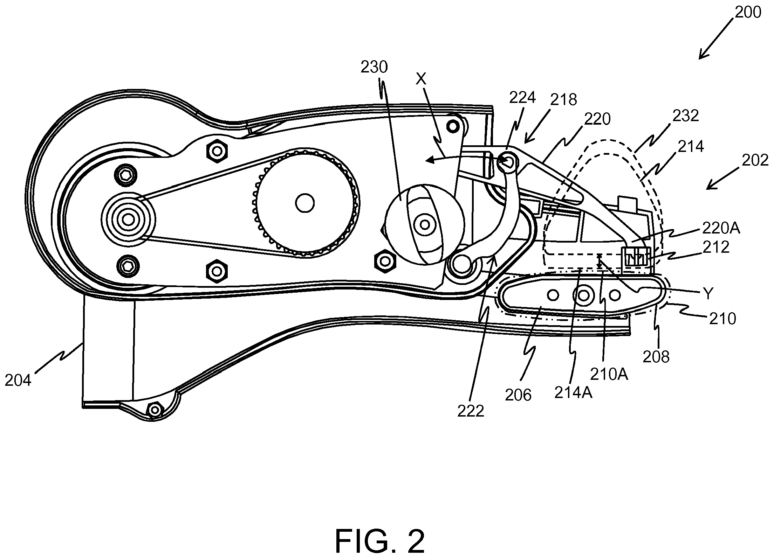

Referring to FIG. 1, illustrated is a perspective view of a device **100** for removing dead hair from a skin of a dog, in accordance with an embodiment of the present disclosure. The device **100** includes means for removing dead hair (shown in FIG. 2) from the skin of the dog and means for attaching **102** the device **100** to a suctioning means (not shown). The device **100** is further shown to include a removable means **104** for guiding hair into the device **100,** and a motor **106.**

Referring now to FIG. 2, illustrated are internal structural and functional means of a device **200** (such as the device **100** of FIG. 1) for the operation thereof, in accordance with an embodiment of the present disclosure. The device **200** includes means for removing **202** dead hair from the skin of the dog, and means for attaching **204** the device **200** to a suctioning means. The means for removing **202** the dead hair includes a base **206** having an endless mat **208** arranged to move along a first predetermined trajectory **210.** The means for removing **202** the dead hair also includes a gripping part **212** arranged to move along a second pre-determined trajectory **214.** The first pre-determined trajectory **210** has a first portion **210A** that is parallel to a second portion **214A** of the second pre-determined trajectory **214.** The means for removing **202** the dead hair further includes a removable means (not shown, such as the removable means **106** shown in FIG. 1) for guiding hair in-between the base **206** and the gripping part **212.**

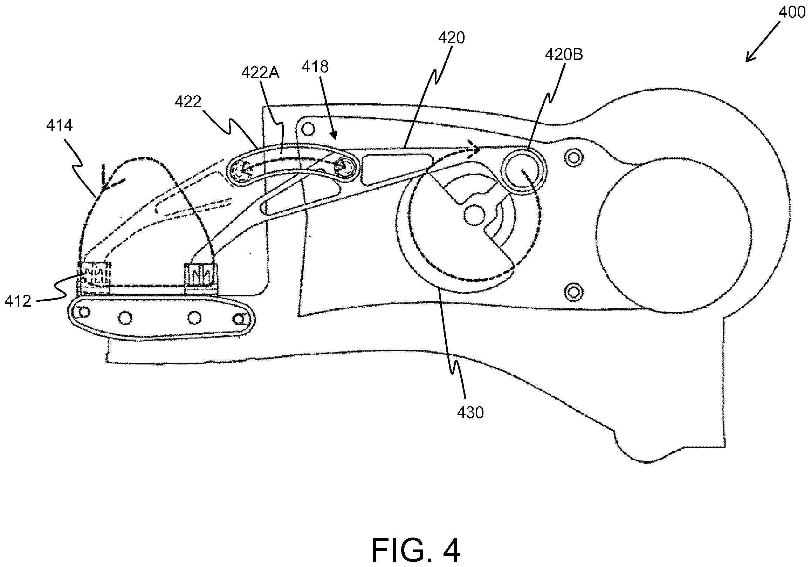

The gripping part **212** is arranged to move by a movement means **218.** The movement means **218** comprises a stem **220** having a first end **220A** and a second end (not shown in FIG. 2, best shown in FIG. 4). The gripping part **212** is arranged in connection with the first end **220A.** The second end of the stem **220** is arranged in connection with a rotary-motion connector (better shown in FIG.4) to allow the second end to rotate about a circle. The movement means **218** further comprises a motion guiding element **222** (for example, a curved pivoting arm) arranged in connection with the stem **220** at a point **224** (such as an intermediate point) between the first end **220A** and the second end of the stem **220.** The motion guiding element **222** allows the intermediate point **224** to move along an arc **X,** thus translating a rotational movement of the second end of the stem **220** into a movement of the gripping part **212** along the second pre-determined trajectory **214.**

As shown, when the second end of the stem **220** is at a most backward and upward position (a shown in FIG. 4), the rotary movement of the second end of the stem **220** (coupled to the rotary-motion connector, shown in FIG. 4) tends to move the second end of the stem **220** downward. However, a downward movement of the intermediate point **224** of the stem **220** is restricted by the motion guiding element **222,** which causes the intermediate point **224** of the stem **220** to pivot and move the first end **220A** of the stem **220** upward, and thereby allowing the gripping part **212** to move upward. The further rotation of the second end of the stem **220** allows the intermediate point **224** of the stem **220** to pivot and slowly move forward along the arc **X.** Therefore, when the intermediate point **224** of the stem **220** reaches a midpoint or midway in the arc **X,** the first end **220A** of the stem **220** is at a heighted point in the second pre-determined trajectory **214.** Thereafter, further rotary movement of the second end of the stem **220** causes the intermediate point **224** of the stem **220** to pivot and move slowly forward along the arc **X,** and the first end **220A** of the stem **220** (connected with the gripping part **212)** to move downward. Therefore, when the intermediate point **224** reaches extreme end of the arc **X** (as show in FIG. 2) in the forward direction (i.e. when the second end of the stem **220** is at a most forward and downward position) the gripping part **212** tends to touch the base **206.** The further rotary movement of the second end of the stem **220** tends to move the entire stem **220** backward allowing the intermediate point **224** of the stem **220** to move linearly backward along the entire arc **X.** The linear movement of the intermediate point **224** of the stem **220** along the entire arc **X** allows for parallel movement of the gripping part **212** with respect to the base **206.** Therefore, the gripping part **212** is configured to follow a D-shaped trajectory (i.e. the second pre-determined trajectory **214)** with respect to the base **206.**

The means for removing **202** dead hair further includes means for adjusting **230** (such as a sliding tab) a distance **Y** between the base **206** and the gripping part **212** along the first portion **210A** and the second portion **214A.** In this embodiment, the means for adjusting **230** the distance **Y** is means for shifting the gripping part **212** towards or further away from the base **206.** As shown, the gripping part **212** is configured to follows the second pre-determined trajectory **214.** Also, the gripping part **212** is configured to follows another second pre-determined trajectory **232.** It will be appreciated that the gripping part **212** is configured to follows the another second pre-determined trajectory **232** by adjusting the distance **Y** between the base **206** and the gripping part **212** with the means for adjusting **230.**

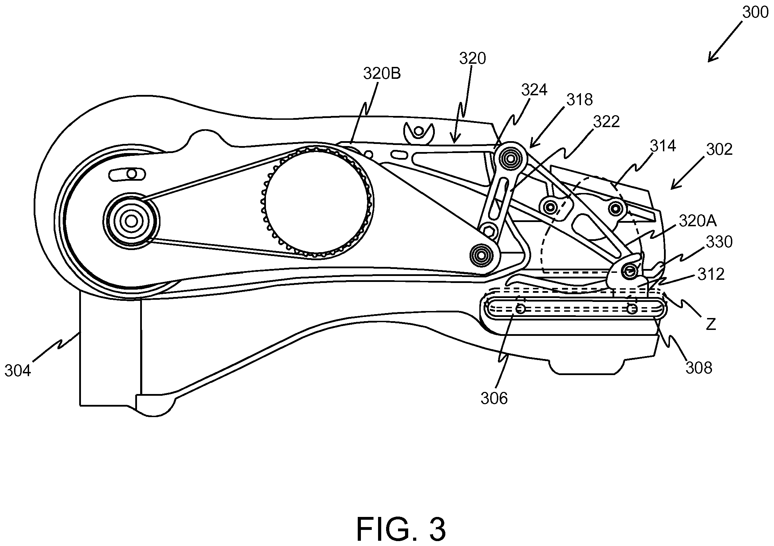

Referring now to FIG. 3, illustrated are internal structural and functional means of a device **300** (such as the device **100** of FIG. 1) for the operation thereof, in accordance with an embodiment of the present disclosure. The device **300** includes means for removing **302** dead hair and means for attaching **304** to the device **300** to a suctioning means (not shown). The means for removing **302** the dead hair includes a base **306** having an endless mat **308** arranged to move along a first predetermined trajectory (i.e. along the base **306,** such as the first predetermined trajectory **210** of FIG. 2). The means for removing **302** the dead hair also includes a gripping part **312** arranged to move along a second pre-determined trajectory **314.** The gripping part **312** is arranged to move by a movement means **318.**

The movement means **318** includes a stem **320** having a first end **320A** and a second end **320B.** The gripping part **312** is arranged in connection with the first end **320A.** The second end **320B** of the stem **320** is arranged in connection with a rotary-motion connector (better shown in FIG.4) to allow the second end **320B** to rotate about a circle. The movement means **318** further includes a motion guiding element **322** (for example, a straight pivoting arm) arranged in connection with the stem **320** at a point **324** (such as an intermediate point) between the first end **320A** and the second end **320B** of the stem **320.** The motion guiding element **322** allows the point **324** to move along an arc (such as the arc **X** of FIG. 2), thus translating a rotational movement of the second end **320B** of the stem **320** into a movement of the gripping part **312** along the second pre-determined trajectory **314.**

As shown in FIG. 3, the means for removing **302** the dead hair further includes means for adjusting **330** (such as a lever mechanism) a distance between the base **306** and the gripping part **312.** In the present embodiment, the means for adjusting **330** the distance is the means for shifting the base **306** towards or further away from the gripping part **312.** As shown, the base **306** is configured to move further towards the gripping part **312** (as shown with dotted position **Z** of the base **306**). This allows in reducing the distance between the base **306** and the gripping part **312.**

Referring now to FIG. 4, illustrated are internal structural and functional means of a device **400** (such as the device **100** of FIG. 1) for the operation thereof, in accordance with an embodiment of the present disclosure. Specifically, FIG. 4 illustrates a device **400** in which a movement means **418** includes a motion guiding element **422,** such an arcuate element having an arc-shaped groove **422A.** It will be appreciated that the arrangement of the arcuate element **422** and a stem **420** works in a similar manner as explained above in reference to the pivoting arms (such as the pivoting arms **222, 322** of FIGs. 2 and 3, respectively) and the stems (such as the stems **220** and **320** of FIGs. 2 and 3, respectively); and thereby allows movement of a griping part **412** along a second pre-determined trajectory **414.** The device **400** also illustrates a second end **420B** of the stem **420** and a rotary-motion connector **430** (to be read in conjunction with FIG. 2).

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A device (100, 200, 300, 400) for removing dead hair from a skin of a dog, comprising
- means for removing (202, 302) dead hair from the skin of the dog, and
- means for attaching (102, 204, 304) the device to a suctioning means, wherein the means for removing dead hair comprises
- a base (206, 306) comprising an endless mat (208, 308) arranged to move along a first pre-determined trajectory (210),
- a gripping part (212, 312, 412) arranged to move along a second pre-determined trajectory (214, 232, 314, 414) by movement means (218, 318, 418), and
- a removable means (104) for guiding hair of the dog between the base and the gripping part,
wherein the first pre-determined trajectory has a first portion (210A) that is parallel to a second portion (214A) of the second pre-determined trajectory, the first portion having a length that is at most 50% of the length of the first pre-determined trajectory and the second portion having a length that is at most 50% of the length of the second pre-determined trajectory, **characterized in that** the means for removing dead hair further comprises means for adjusting (230, 330) a distance (Y) between the base and the gripping part along the first portion and the second portion.

2. A device according to claim 1, wherein the means for removing dead hair is arranged to exert a pulling force of 5-50 N on the dead hair.

3. A device according to claim 1 or 2, wherein the means for adjusting (330) the distance is a means for shifting the base (306) towards or further away from the gripping part (312).

4. A device according to claim 1 or 2, wherein the means for adjusting (230) the distance (Y) is a means for shifting the gripping part (212) towards or further away from the base (206).

5. A device according to any of the preceding claims, wherein the gripping part (212, 312) comprises at least one removable elastomeric surface pad.

6. A device according to any of the preceding claims, wherein the endless mat (208, 308) is made of an elastomeric material.

7. A device according to claim 5 or 6, wherein the elastomeric material is selected from rubber, polyurethane and silicone.

8. A device according to any of the preceding claims, wherein the first portion (210A) and the second portion (214A) have a length of 10-40 mm.

9. A device according to any of the preceding claims, wherein the movement means (218, 318, 418) comprise
- a stem (220, 320, 420) having a first end (220A, 320A) and a second end (320B, 420B), the gripping part being arranged in connection with the first end, and wherein the second end of the stem is arranged in connection with a rotary-motion connector (430) to allow the second end to rotate, and
- a motion guiding element (222, 322, 422) arranged in connection with the stem at a point (224, 324) between the first end and the second end of the stem, the motion guiding element allowing the point between the first end and the second end to move along an arc (X), thus translating a rotational movement of the second end of the stem into a movement of the gripping part along the second pre-determined trajectory (214, 232, 314, 414).

10. A device according to claim 9, further comprising a motor (106) arranged in connection with the rotary-motion connector (430) to provide the rotational movement to the second end (320B, 420B) of the stem (220, 320, 420).

11. A device according to claim 9, wherein the motion guiding element (222, 322) comprises a pivoting arm.

12. A device according to claim 9, wherein the motion guiding element (422) comprises an arcuate element having an arc-shaped groove (422A) .

13. A device according to any of the preceding claims, wherein the second pre-determined trajectory (214, 232, 314, 414) includes a substantially D-shape.

## Patentansprüche

1. Vorrichtung (100, 200, 300, 400) zum Entfernen toter Haare von einer Haut eines Hundes, umfassend
- Mittel zum Entfernen von (202, 302) toter Haare von der Haut des Hundes, und
- Mittel zum Anbringen (102, 204, 304) der Vorrichtung an einem Absaugmittel, wobei das Mittel zum Entfernen toter Haare umfasst
- ein Unterteil (206, 306), das eine Endlosmatte (208, 308) umfasst, die so ausgelegt ist, dass sie sich entlang einer ersten vorgegebenen Bewegungsbahn (210) bewegt,
- ein Greifteil (212, 312, 412), das so ausgelegt ist, dass es sich durch Bewegungsmittel (218, 318, 418) entlang einer zweiten vorgegebenen Bewegungsbahn (214, 232, 314, 414) bewegt, und
- ein demontierbares Mittel (104) zum Führen der Haare des Hundes zwischen dem Unterteil und dem Greifteil,
wobei die erste vorgegebene Bewegungsbahn einen ersten Abschnitt (210A) aufweist, der parallel zu einem zweiten Abschnitt (214A) der zweiten vorgegebenen Bewegungsbahn verläuft, wobei der erste Abschnitt eine Länge aufweist, die höchstens 50 % der Länge der ersten vorgegebenen Bewegungsbahn beträgt, und der zweite Abschnitt eine Länge aufweist, die höchstens 50 % der Länge der zweiten vorgegebenen Bewegungsbahn beträgt, **dadurch gekennzeichnet, dass** das Mittel zum Entfernen toter Haare ferner Mittel zum Einstellen (230, 330) eines Abstands (Y) zwischen dem Unterteil und dem Greifteil entlang des ersten Abschnitts und des zweiten Abschnitts umfasst.

2. Vorrichtung nach Anspruch 1, wobei das Mittel zum Entfernen toter Haare so ausgelegt ist, dass es eine Zugkraft von 5 bis 50 N auf die toten Haare ausübt.

3. Vorrichtung nach Anspruch 1 oder 2, wobei das Mittel zum Einstellen (330) des Abstands ein Mittel zum Verschieben des Unterteils (306) in Richtung des Greifteils (312) oder weiter von diesem weg ist.

4. Vorrichtung nach Anspruch 1 oder 2, wobei das Mittel zum Einstellen (230) des Abstands (Y) ein Mittel zum Verschieben des Greifteils (212) in Richtung des Unterteils (206) oder weiter von diesem weg ist.

5. Vorrichtung nach einem der vorstehenden Ansprüche, wobei das Greifteil (212, 312) mindestens ein demontierbares elastomeres Oberflächenpolster umfasst.

6. Vorrichtung nach einem der vorstehenden Ansprüche, wobei die Endlosmatte (208, 308) aus einem elastomeren Material hergestellt ist.

7. Vorrichtung nach Anspruch 5 oder 6, wobei das elastomere Material aus Gummi, Polyurethan und Silikon ausgewählt ist.

8. Vorrichtung nach einem der vorstehenden Ansprüche, wobei der erste Abschnitt (210A) und der zweite Abschnitt (214A) eine Länge von 10 bis 40 mm aufweisen.

9. Vorrichtung nach einem der vorstehenden Ansprüche, wobei die Bewegungsmittel (218, 318, 418) umfassen
- einen Schaft (220, 320, 420), der ein erstes Ende (220A, 320A) und ein zweites Ende (320B, 420B) aufweist, wobei das Greifteil in Verbindung mit dem ersten Ende steht und wobei das zweite Ende des Schaftes in Verbindung mit einem Drehbewegungsverbinder (430) steht, um ein Drehen des zweiten Endes zu ermöglichen, und
- ein Bewegungsführungselement (222, 322, 422) in Verbindung mit dem Schaft an einem Punkt (224, 324) zwischen dem ersten Ende und dem zweiten Ende des Schaftes, wobei das Bewegungsführungselement ermöglicht, dass sich der Punkt zwischen dem ersten Ende und dem zweiten Ende entlang eines Bogens (X) bewegt, wodurch eine Drehbewegung des zweiten Endes des Schaftes in eine Bewegung des Greifteils entlang der zweiten vorgegebenen Bewegungsbahn (214, 232, 314, 414) umgesetzt wird.

10. Vorrichtung nach Anspruch 9, ferner umfassend einen Motor (106), der in Verbindung mit dem Drehbewegungsverbinder (430) steht, um die Drehbewegung dem zweiten Ende (320B, 420B) des Schaftes (220, 320, 420) bereitzustellen.

11. Vorrichtung nach Anspruch 9, wobei das Bewegungsführungselement (222, 322) einen Schwenkarm umfasst.

12. Vorrichtung nach Anspruch 9, wobei das Bewegungsführungselement (422) ein gebogenes Element umfasst, das eine bogenförmige Nut (422A) aufweist.

13. Vorrichtung nach einem der vorstehenden Ansprüche, wobei die zweite vorgegebene Bewegungsbahn (214, 232, 314, 414) im Wesentlichen eine D-Form beinhaltet.

## Revendications

1. Dispositif (100, 200, 300, 400) pour retirer les poils morts d'une peau d'un chien, comprenant
- des moyens pour retirer (202, 302) les poils morts de la peau du chien, et
- des moyens pour fixer (102, 204, 304) le dispositif à un moyen d'aspiration, dans lequel le moyen pour retirer les poils morts comprend
- une base (206, 306) comprenant un tapis sans fin (208, 308) agencé pour se déplacer le long d'une première trajectoire prédéterminée (210),
- une partie de préhension (212, 312, 412) agencée pour se déplacer le long d'une seconde trajectoire prédéterminée (214, 232, 314, 414) par des moyens de déplacement (218, 318, 418), et
- un moyen amovible (104) pour guider les poils du chien entre la base et la partie de préhension,
dans lequel la première trajectoire prédéterminée possède une première partie (210A) qui est parallèle à une seconde partie (214A) de la seconde trajectoire prédéterminée, la première partie ayant une longueur qui représente au plus 50 % de la longueur de la première trajectoire prédéterminée et la seconde partie ayant une longueur qui représente au plus 50 % de la longueur de la seconde trajectoire prédéterminée, **caractérisé en ce que** le moyen pour retirer les poils morts comprend en outre des moyens de réglage (230, 330) d'une distance (Y) entre la base et la partie de préhension le long de la première partie et de la seconde partie.

2. Dispositif selon la revendication 1, dans lequel le moyen pour retirer les poils morts est agencé pour exercer une force de traction de 5-50 N sur les poils morts.

3. Dispositif selon la revendication 1 ou 2, dans lequel le moyen de réglage (330) de la distance est un moyen de déplacement de la base (306) vers ou à l'écart de la partie de préhension (312).

4. Dispositif selon la revendication 1 ou 2, dans lequel le moyen de réglage (230) de la distance (Y) est un moyen de déplacement de la partie de préhension (212) vers ou à l'écart de la base (206).

5. Dispositif selon l'une quelconque des revendications précédentes, dans lequel la partie de préhension (212, 312) comprend au moins un tampon de surface élastomère amovible.

6. Dispositif selon l'une quelconque des revendications précédentes, dans lequel le tapis sans fin (208, 308) est constitué d'un matériau élastomère.

7. Dispositif selon la revendication 5 ou 6, dans lequel le matériau élastomère est choisi parmi le caoutchouc, le polyuréthane et la silicone.

8. Dispositif selon l'une quelconque des revendications précédentes, dans lequel la première partie (210A) et la seconde partie (214A) ont une longueur de 10 à 40 mm.

9. Dispositif selon l'une quelconque des revendications précédentes, dans lequel les moyens de déplacement (218, 318, 418) comprennent
- une tige (220, 320, 420) possédant une première extrémité (220A, 320A) et une seconde extrémité (320B, 420B), la partie de préhension étant agencée en relation avec la première extrémité, et dans lequel la seconde extrémité de la tige est agencée en relation avec un connecteur à mouvement rotatif (430) pour permettre à la seconde extrémité de tourner, et
- un élément de guidage de mouvement (222, 322, 422) disposé en relation avec la tige à un point (224, 324) entre la première extrémité et la seconde extrémité de la tige, l'élément de guidage de mouvement permettant au point entre la première extrémité et la seconde extrémité de se déplacer le long d'un arc (X), traduisant ainsi un mouvement de rotation de la seconde extrémité de la tige en un mouvement de la partie de préhension le long de la seconde trajectoire prédéterminée (214, 232, 314, 414).

10. Dispositif selon la revendication 9, comprenant en outre un moteur (106) agencé en relation avec le connecteur à mouvement rotatif (430) pour fournir le mouvement de rotation à la seconde extrémité (320A, 420B) de la tige (220, 320, 420).

11. Dispositif selon la revendication 9, dans lequel l'élément de guidage de mouvement (222, 322) comprend un bras pivotant.

12. Dispositif selon la revendication 9, dans lequel l'élément de guidage de mouvement (422) comprend un élément arqué possédant une rainure en forme d'arc (422A).

13. Dispositif selon l'une quelconque des revendications précédentes, dans lequel la seconde trajectoire prédéterminée (214, 232, 314, 414) inclut une forme sensiblement en D.
